# EUROPÄISCHE PATENTANMELDUNG

(11) **EP 4 610 942 A1**
(43) Veröffentlichungstag der Anmeldung: **03.09.2025**
(21) Anmeldenummer: 25150741.4
(22) Anmeldetag: 08.01.2025
(51) Int. Cl.: G06V 20/52, B23K 31/12, G06T 7/00, G06T 7/20, G06V 40/20

(54) **VERFAHREN UND ANORDNUNG ZUM ÜBERWACHEN EINES PRODUKTIONSPROZESSSCHRITTS**

(30) Priorität: 29.02.2024 DE 102024105860
(71) Anmelder: SICK AG, 79183 Waldkirch (DE)
(72) Erfinder: Schonhardt, Stefan, 79256 Buchenbach (DE)
(74) Vertreter: Manitz Finsterwald Patent- und Rechtsanwaltspartnerschaft mbB

(57) **Zusammenfassung**

In einer Ausführungsform umfasst ein Verfahren zum Überwachen eines Produktionsprozessschritts folgende Schritte: optisches Erfassen mindestens zweier Bewegungen (B1, B2) und Erzeugen entsprechender Bilddaten, wobei die Bewegungen (B1, B2) während des Produktionsprozessschritts ausgeführt werden, und wobei mindestens eine dieser Bewegungen (B1, B2) zumindest teilweise händisch von einem Werker (10) durchgeführt wird; Erstellen mindestens zweier Bewegungsgraphen (G1, G2) in Abhängigkeit der mindestens zwei erfassten Bewegungen (B1, B2) anhand der Bilddaten, wobei jeder Bewegungsgraph (G1, G2) eine Zeitinformation und eine zugehörige Ortsinformation umfasst; Analysieren der mindestens zwei Bewegungsgraphen (G1, G2); und Bereitstellen eines Auswertesignals in Abhängigkeit eines Ergebnisses des Analysierens.

## Beschreibung

Die vorliegende Erfindung betrifft ein Verfahren zum Überwachen eines Produktionsprozessschritts und eine Anordnung zum Überwachen eines Produktionsprozessschritts.

In modernen Produktionsprozessen werden Produkte, beispielsweise bestückte Halbleiterplatinen, in mehreren Prozessschritten gefertigt. Die in dieser Anmeldung betrachteten Produktionsprozesse umfassen einen oder mehrere Schritte, in denen ein Werkstück oder Zwischenprodukt manuell von einer Person, im Folgenden als Werker bezeichnet, bearbeitet. Unter anderem zu Überwachung einer Qualität und/oder Effizienz eines derartigen teilweise händischen Produktionsprozessschritts kann es interessant sein, diesen zu analysieren. Insbesondere ist es wünschenswert, beispielsweise eine Fehlererkennung zu ermöglichen, auf Vollständigkeit zu prüfen, eine korrekte Ausführung des Prozesses zu erkennen, den tatsächlichen Aufwand in Form von Zeit zu ermitteln, und davon ausgehend Optimierungen vorzunehmen.

Es ist bekannt, Einzelprozesse zu bewerten und zwar anhand eines Tests des Ergebnisses, also Produkts oder Teilprodukts, in einem separaten Schritt nach Ausführen des Prozesses, oder am Ende der Produktionslinie in Form eines Endtests. Der Test in einem separaten Schritt ist jedoch zeitaufwendig und kostspielig. Ein End- oder Abschlusstest verhindert ein frühes beziehungsweise rechtzeitiges Eingreifen und Gegensteuern.

Des Weiteren ist bekannt, Arbeitsschritte einer Fertigung durch einen Werker mittels einer Videokamera aufzuzeichnen. Einerseits werden die aufgezeichneten Daten dazu benutzt, Arbeitsanweisungen für einen Werker zu erzeugen, sodass dieser anhand einer grafischen Anzeige der Arbeitsanweisungen weitere Schritte oder Teilschritte ausführen kann. Andererseits wird das aufgezeichnete Videomaterial abgespeichert und erst im Anschluss im Hinblick auf mögliche Abweichungen in den vom Werker händisch ausgeführten Arbeitsschritten analysiert.

Eine Aufgabe besteht folglich darin, ein Verfahren und eine Anordnung anzugeben, welche das Überwachen eines Produktionsprozessschritts verbessert.

Diese Aufgabe wird durch ein Verfahren gemäß Anspruch 1, sowie durch eine Anordnung gemäß Anspruch 14 gelöst.

Gemäß dem Verfahren wird ein Produktionsprozessschritt überwacht. Dazu werden die folgenden Schritte ausgeführt:
Mindestens zwei Bewegungen werden optisch erfasst und entsprechende Bilddaten werden erzeugt, wobei die Bewegungen während des Produktionsprozessschritts ausgeführt werden und wobei mindestens eine dieser Bewegungen zumindest teilweise händisch von einem Werker durchgeführt wird,
mindestens zwei Bewegungsgraphen werden in Abhängigkeit der mindestens zwei erfassten Bewegungen anhand der Bilddaten erstellt, wobei jeder Bewegungsgraph eine Zeitinformation und eine zugehörige Ortsinformation umfasst, die mindestens zwei Bewegungsgraphen werden analysiert, und ein Auswertesignal wird in Abhängigkeit eines Ergebnisses dieser Analyse bereitgestellt.

Die während des Produktionsprozessschritts durchgeführten mindestens zwei Bewegungen werden also optisch erfasst und zu Bewegungsgraphen abstrahiert. Auf Basis der Analyse der zwei Bewegungsgraphen wird das Auswertesignal erzeugt. Dabei werden die Bewegungen, vorzugsweise nahezu, gleichzeitig ausgeführt und ermöglichen das Erstellen eines Produkts des Produktionsprozessschritts.

Aufgrund der Abstraktion der ausgeführten Bewegungen in Form von Bewegungsgraphen wird die der Analyse zugeführte Datenmenge drastisch reduziert. Die Darstellung der Bewegungen in Form von schematischen Bewegungsgraphen ermöglicht zudem eine zeitnahe, insbesondere mathematische, Analyse sowie Beurteilung des in dem Produktionsprozessschritt erarbeiteten oder hergestellten Produkts bzw. Teilprodukts. Ein auf Basis des Auswertesignals als fehlerhaft beurteiltes Produkt kann somit direkt nach diesem Produktionsprozessschritt aussortiert werden und nicht erst nach einem Endtest. Damit wird zudem die Belastung der Produktion verringert. Zudem ermöglicht die Abstraktion eine Anonymisierung des Werkers und trägt damit zu einem verbesserten Datenschutz bei.

Mit Vorteil ist es auch möglich, dem Werker auf Basis des Auswertesignals eine zeitnahe Rückmeldung darüber zu geben, ob der aktuelle Prozessschritt den Vorgaben gemäß durchgeführt wurde oder ob gegebenenfalls etwas vergessen wurde. Auch eine vom Optimum abweichende Ausführung der Bewegung oder/und falsche bzw. nicht ergonomisch bzw. nicht effizient ausgeführte Bewegungen können erkannt und signalisiert oder zurückgemeldet werden. Dies ist insbesondere bei der Einarbeitung neuer Werker bzw. Mitarbeiter von Vorteil.

Der Produktionsprozessschritt ist beispielsweise ein Fertigungsschritt, der Teil eines Produktionsprozesses ist. In der vorliegenden Erfindung wird dieser Produktionsprozessschritt unter Beteiligung eines Werkers, also teilweise oder gänzlich manuell bzw. händisch durchgeführt. Beispielsweise beinhaltet der Produktionsprozessschritt das Einlöten eines elektronischen Bauelements in eine Platine, das Produkt ist in diesem Beispiel die Platine mit eingelötetem Bauteil. Üblicherweise wird ein derartiger Produktionsprozessschritt an einem Fertigungsarbeitsplatz ausgeführt. Dazu führt der Werker bestimmte, wiederkehrende Bewegungen durch. Beispielsweise führt bei einem Lötvorgang der Werker mit einer Hand eine Bewegung mit einem Lötkolben von dessen Ruheplatz zu der Stelle, an der das Bauelement eingelötet werden soll durch, während er mit der anderen Hand eine Bewegung mit dem Lot, beispielsweise Lötzinn, von dessen Ruheplatz zur Lötstelle ausführt. Der Lötkolben und die Hand mit dem Lot verweilen daraufhin für die Dauer des Lötvorgangs nahe beieinander an der Lötstelle, bevor Lötkolben und Lot wieder an ihren jeweiligen Ruheplatz zurückgelegt werden. Diese beiden Bewegungen werden optisch erfasst und in in diesem Beispiel zweidimensionale Bewegungsgraphen umgewandelt. Ein derartiger Bewegungsgraph kann auch als Raumkurve oder Trajektorie bezeichnet werden.

In einer Weiterbildung kann ein jeder Bewegungsgraph auch dreidimensional sein, beispielsweise mit zwei Ortsinformationen von aufeinander senkrecht stehenden Richtungen und einer zugehörigen Zeitinformation.

In einer Weiterbildung erfolgt das optische Erfassen unter Verwendung mindestens einer feststehenden Kamera oder einer an dem Werker befestigten Kamera.

Beispielsweise wird eine handelsübliche Videokamera, insbesondere eine sogenannte field of view Kamera, eingesetzt. Diese ist entweder feststehend an dem Fertigungsarbeitsplatz montiert oder an dem Werker befestigt, beispielsweise an dessen Kopf oder Schulter, sodass sie den Produktionsprozessschritt optisch erfasst. Selbstverständlich können auch noch eine oder mehrere weitere Kameras zur optischen Erfassung in dem angegebenen Verfahren eingesetzt werden. Die Bilddaten der einzelnen Kameras würden in einem solchen Fall kombiniert in die Bewegungsgraphen umgewandelt werden. Beim Einsatz zweier Kameras zum Beispiel können 3D Daten erzeugt werden.

Der Einsatz einer Kamera zur optischen Erfassung der Bewegungen erübrigt den Einsatz mehrerer Sensoren, die anderenfalls hierfür nötig wären. Zudem kann die Kamera ohne Störung des laufenden Produktionsprozesses installiert werden. Es ist dafür keinerlei Änderung an dem Prozess und/oder der darin eingesetzten Maschinen erforderlich, sodass auch bereits installierte Maschinen ohne digitale Steuerung mit dem vorgeschlagenen Verfahren unter Verwendung der Kamera überwacht werden können.

Gemäß einer Ausführungsform umfasst das Erstellen eines jeden Bewegungsgraphen die folgenden Schritte:
Erkennen eines die Bewegung durchführenden Objekts in den Bilddaten anhand mindestens eines vordefinierten Merkmals,
mehrfaches Bestimmen einer Position des Objekts in aufeinander folgenden Einzelbildern der Bilddaten und Bereitstellen von entsprechenden Objektpunkten in einem Zeit-Ort-Diagramm, und
Anfertigen des Bewegungsgraphen durch Verbinden der Objektpunkte.

Dabei können beim Bestimmen der Position des Objekts direkt aufeinander folgende Einzelbilder verwendet werden oder eine Auswahl von Einzelbildern. Im Fall einer Verwendung direkt aufeinander folgender Einzelbilder werden die Objektpunkte direkt verbunden, während bei der Verwendung einer Auswahl der Einzelbilder bei der Verbindung der Objektpunkte Interpolation eingesetzt werden kann.

Die so entstandenen Bewegungsgraphen bilden also die während des Prozessschritts ausgeführten Bewegungen ab und ermöglichen somit eine Bewertung der Ausführung im Hinblick auf z.B. Dauer, Ergonomie und Vollständigkeit.

Gemäß einer Weiterbildung erfolgt das Erkennen des die Bewegung durchführenden Objekts in den Bilddaten anhand des mindestens einen vordefinierten Merkmals unter Einsatz einer Mustererkennung. Das vordefinierte Merkmal ist dabei ein vordefiniertes Muster, insbesondere ein vordefiniertes Muster aus mehreren Farbpunkten.

Das vordefinierte Merkmal kann also eine vordefinierte graphische Struktur sein. Die Farbgebung ist dabei nicht festgelegt.

Gemäß einer Weiterbildung ist das mindestens eine vordefinierte Merkmal ein visueller, digitaler Code, insbesondere ein QR-Code oder ein Strichcode.

Das vordefinierte Muster oder der Code können beispielsweise an einem von dem Werker getragenen Handschuh angebracht sein, oder bzw. und an einem in dem Produktionsprozessschritt verwendeten Werkzeug, z.B. einem Lötkolben oder an einem zu behandelnden Bauteil angebracht sein. Der Handschuh des Werkers, das verwendete Werkzeug oder das zu behandelnde Bauteile sind Beispiele für das die Bewegung ausführende Objekt.

Gemäß einer Weiterbildung umfasst das Erkennen des die Bewegung durchführenden Objekts in den Bilddaten anhand des mindestens einen vordefinierten Merkmals einen Vergleich des vordefinierten Merkmals mit einem Element einer vordefinierten Bibliothek.

Die Bibliothek kann dabei im Produktionsprozess verwendete Bauteile und auch Werkzeuge enthalten, die jeweils graphisch dargestellt sind.

Ein Algorithmus, der im Rahmen der Erkennung des die Bewegung durchführenden Objekts in den Bilddaten anhand des mindestens einen vordefinierten Merkmals eingesetzt wird, beispielsweise eine Mustererkennung, die auf einem künstlichen neuronalen Netz basieren kann, wird vorab trainiert bzw. angelernt. Somit ist vorteilhafterweise die genaue Ausführung des vordefinierten Merkmals, welches in der Erkennung verwendet wird, ohne Belang, solange der Algorithmus mit diesem Merkmal trainiert wurde. Es können folglich auch Weiterentwicklungen der oben beschriebenen visuellen digitalen Codes verwendet werden. Das Anlernen des Algorithmus zum Erkennen von Objekten, die die Bewegung durchführen, kann beispielsweise im Parallelbetrieb zur laufenden Produktion in dem Produktionsprozess erfolgen.

Speziell bei der Mustererkennung oder auch beim Vergleichen mit Einträgen in der vordefinierten Bibliothek kann zusätzlich maschinelles Lernen zum Einsatz kommen, um das Verfahren weiter zu optimieren. Insbesondere kann das maschinelle Lernen auf dem oben genannten künstlichen neuronalen Netz basieren, welches auf die Erkennung der Objekte trainiert wurde. Beispielsweise kann das neuronale Netz mit einer Vielzahl an Bildern von bekannten Objekten (z.B. elektrische Bauteile, wie Transistoren, Widerstände, Kondensatoren, etc., oder mechanischen Bauteilen, wie Schrauben, Befestigungen, etc.) trainiert werden, sodass das neuronale Netz dann in den Bilddaten ein jeweiliges Objekt und insbesondere dessen Position erkennen kann.

Gemäß einer Weiterbildung umfasst das Analysieren der mindestens zwei Bewegungsgraphen ein Bestimmen und Bereitstellen eines oder mehrerer der folgenden Auswerteparameter als Ergebnis:
eine relative Position einzelner Punkte der mindestens zwei Bewegungsgraphen zueinander, insbesondere ein Abstand zwischen denselben,
eine jeweilige Geschwindigkeit der Bewegung aus der der Bewegungsgraph abgeleitet ist,
eine jeweilige Beschleunigung der Bewegung aus der der Bewegungsgraph abgeleitet ist, oder
eine jeweilige Ruhezeit in der Bewegung aus der der Bewegungsgraph abgeleitet ist.

Der Abstand ist beispielsweise der geometrische Abstand zwischen den zwei Bewegungsgraphen zum selben Zeitpunkt. Zum Bestimmen der Geschwindigkeit wird bekanntermaßen die dem Bewegungsgraphen zugrunde liegende Funktion mathematisch nach der Zeit abgeleitet. Zum Bestimmen der Beschleunigung wird bekanntermaßen die Funktion des Bewegungsgraphen zweimal nach der Zeit abgeleitet. Die Ruhezeit ergibt sich aus einer Differenz zwischen einem Endzeitpunkt und einem Anfangszeitpunkt, während denen sich die Ortsinformation des Objekts nicht oder nur geringfügig verändert.

Gemäß einer Weiterbildung umfasst das Analysieren der mindestens zwei Bewegungsgraphen einen Vergleich der mindestens zwei Bewegungsgraphen mit mindestens zwei für diesen Produktionsprozessschritt vordefinierten Referenzgraphen, insbesondere unter Verwendung von künstlicher Intelligenz, und ein Bereitstellen eines aus dem Vergleich abgeleiteten Korrelationsindikators.

Alternativ oder zusätzlich zu der oben beschriebenen Analyse, deren Ergebnis in Form von einem oder mehreren Auswerteparametern bereitgestellt wird, ist es erfindungsgemäß vorgesehen, die mindestens zwei Bewegungsgraphen mit mindestens zwei Referenzgraphen zu vergleichen und einen entsprechenden Korrelationsindikator bereitzustellen.

Der Korrelationsindikator kann beispielsweise berechnet werden, indem die Abweichung des Bewegungsgraphen von dem jeweiligen Referenzgraphen ermittelt wird. Die Abweichung kann z.B. abschnittsweise ermittelt und aufsummiert werden. Der Korrelationsindikator kann dabei ein Maß dafür sein, inwieweit die in dem Produktionsprozessschritt aus den ausgeführten Bewegungen abstrahierten Bewegungsgraphen mit hierfür jeweils vordefinierten Referenzgraphen übereinstimmen. Ein hoher Wert des Korrelationsindikators ergibt sich beispielsweise aus einer hohen Übereinstimmung zwischen dem aus der Bewegung abstrahierten Bewegungsgraphen und seinem Referenzgraph.

Der Korrelationsindikator kann auch durch eine künstliche Intelligenz ermittelt werden, beispielsweise ein weiteres künstliches neuronales Netz. Dieses weiter neuronale Netz kann mit einer Vielzahl von Bewegungsgraphen trainiert worden sein, für welche jeweils der Korrelationsindikator und/oder der Referenzgraph bekannt ist, sodass die künstliche Intelligenz dann selbst einen Korrelationsindikator ausgeben kann. Der Korrelationsindikator kann in diesem Fall auch binär sein, d.h. beispielsweise nur "Pass" oder "Fail" als mögliche Zustände besitzen.

Gemäß einer Weiterbildung ist das Auswertesignal in Abhängigkeit mindestens eines Auswerteparameters und/oder in Abhängigkeit des Korrelationsindikators bereitgestellt.

Das Auswertesignal wird also auf Basis eines einzelnen Auswerteparameters, einer Kombination mehrerer Auswerteparameter, oder auf Basis des Korrelationsindikators oder basierend auf einer Kombination des Korrelationsindikators mit einem oder mehreren Auswerteparametern bereitgestellt. Dabei werden unter Umständen mehrere Einzelergebnisse der Analyse in geeigneter Art und Weise verknüpft oder kombiniert. Beim Bereitstellen des Auswertesignals können zusätzlich zu Auswerteparameter und/oder Korrelationsindikator auch aus statistischen Erhebungen stammende Erfahrungswerte berücksichtigt werden, die beispielsweise eine Ausfallwahrscheinlichkeit eines in dem Produktionsprozessschritt hergestellten Produkts oder Teilprodukts in Abhängigkeit von einem Auswerteparameter berücksichtigen.

Gemäß einer Weiterbildung zeigt das Auswertesignal eine Qualität eines Ergebnisses des Produktionsprozessschritts, insbesondere die Qualität eines in dem Produktionsprozessschritt erzeugten Produkts, an.

Vorzugsweise zeigt das Auswertesignal an, ob das in diesem Prozessschritt erzeugte Produkt als Fehlerteil einzuordnen ist oder nicht. Somit kann ein hergestelltes mangelhaftes Produkt direkt nach dem Produktionsprozessschritt aussortiert werden und nicht erst am Ende eines vollständigen Produktionsprozesses nach Überprüfung des Endprodukts, was den gesamten Produktionsprozess optimiert.

Gemäß einer Ausführung umfasst das Erzeugen der den mindestens zwei Bewegungen entsprechenden Bilddaten ein Verkleinern eines in den Bilddaten dargestellten Ausschnitts auf einen Bildbereich, in welchem die mindestens zwei Bewegungen erfasst wurden.

Das Erzeugen der den Bewegungen entsprechenden Bilddaten fokussiert sich also auf den Ausschnitt, in welchem eine Bewegung, also Aktivität, detektiert wird. Somit wird die Datenmenge, welche in dem erfindungsgemäßen Verfahren zum Erstellen der mindestens zwei Bewegungsgraphen verwendet wird, reduziert, was eine Ausführung des Verfahrens vorteilhafterweise beschleunigt und gleichzeitig Rechenaufwand und Speicherbedarf reduziert.

In einer weiteren Ausführungsform umfasst das Verfahren folgendes: Durchlaufen einer Vorbereitungsphase umfassend die Schritte:
optisches Erfassen mindestens zweier Sollbewegungen und Erzeugen entsprechender Referenzbilddaten, wobei die Sollbewegungen während des Produktionsprozessschritts ausgeführt werden, und wobei mindestens eine dieser Sollbewegungen zumindest teilweise händisch von einem Werker durchgeführt wird,
Erstellen mindestens zweier Referenzgraphen in Abhängigkeit der mindestens zwei erfassten Sollbewegungen anhand der Referenzbilddaten, wobei jeder Referenzgraph eine Zeitinformation und eine zugehörige Ortsinformation umfasst,
Bereitstellen der Referenzgraphen als für den Produktionsprozessschritt vordefinierte Referenzgraphen.

Demgemäß werden in der Vorbereitungsphase anhand von Sollbewegungen, d.h. korrekt ausgeführten Bewegungen bzw. Bewegungen, die zur Produktion eines fehlerfreien Produkts des Prozessschritts führen, Referenzgraphen erstellt. Dabei werden die Sollbewegungen vorzugsweise nahezu gleichzeitig ausgeführt und ermöglichen das Erstellen des Produkts des Produktionsprozessschritts. Diese Referenzgraphen werden beim Analysieren der Bewegungsgraphen, die aus dem laufenden Betrieb während des Produktionsprozessschritts hervorgehen, bei dem oben beschriebenen Vergleich eingesetzt. Bevorzugt wird die Vorbereitungsphase zeitlich vor einem ersten optischen Erfassen von mindestens zwei Bewegungen des erfindungsgemäßen Verfahrens durchgeführt.

Alternativ können die in der Vorbereitungsphase durchgeführten Sollbewegungen auch dergestalt sein, dass sie absichtlich zu einem fehlerhaften Produkt des Produktionsprozessschritts führen. In diesem Fall wird der Korrelationsindikator, der sich aus der Analyse der Bewegungsgraphen im laufenden Betrieb ergibt, beim Bereitstellen des Auswertesignals entsprechend anders interpretiert.

Gemäß einer Ausgestaltung ist der Produktionsprozessschritt ein Lötvorgang oder umfasst einen solchen. Darin ist eine erste Bewegung ein Führen eines Lötkolbens mit einer ersten Hand des Werkers und eine zweite Bewegung ein korrespondierendes Führen eines Lots mit einer zweiten Hand des Werkers. Das Analysieren der zwei die Bewegungen abstrahierenden Bewegungsgraphen umfasst ein Ermitteln eines Abstands zwischen den zwei Bewegungsgraphen bezogen auf die Zeitinformation. Das Auswertesignal zeigt eine Dauer des Lötvorgangs an.

Die Dauer des Lötvorgangs ist in der Folge ein Indikator dafür, ob der Lötprozess korrekt durchgeführt wurde. Eine sogenannte kalte Lötstelle kann somit direkt erkannt und das davon betroffene Produkt bzw. Teilprodukt direkt aussortiert werden. Zudem kann aus der Dauer ein Rückschluss darauf erfolgen, welche Menge des Lots verwendet wurde. Somit ermöglicht das erfindungsgemäße Verfahren Produktionsprozessschritte, die unter Beteiligung eines Werkers stattfinden, bereits während der Ausführung zu überwachen und zu überprüfen, um sicherzustellen, dass ein in dem Schritt hergestelltes Produkt den Vorgaben entspricht.

In einer Ausführungsform umfasst der Produktionsprozessschritt einen Klebevorgang, einen Schraubvorgang und/oder ein Bohren.

Beispielsweise kann bei dem Klebevorgang erkannt werden, ob der Werker die Öffnung eines Klebstoffbehälters oder einer Klebepistole an die gewünschten Positionen gebracht hat. Über die Verweildauer an den jeweiligen Positionen kann auf die aufgebrachte Menge von Klebstoff rückgeschlossen werden.

Bei dem Schraubvorgang kann anhand der Bewegungsgraphen erkannt werden, ob eine Schraube an eine korrekte Position bewegt wurde und ob die Spitze eines Schraubwerkzeugs zumindest für eine vorbestimmte Zeit an der korrekten Position der Schraube verweilt hat. Zudem kann überprüft werden, ob die Schraube nach dem Verschrauben an ihrer Position verbleibt.

Bei einem Bohren kann über einen Bewegungsgraphen die Bewegung des Bohrers nachvollzogen werden. Insbesondere kann nach dem Bohren über Mustererkennung das Vorhandensein eines Bohrlochs überprüft werden.

In einer Ausführungsform umfasst eine Anordnung zum Überwachen eines Produktionsprozessschritts eine Kamera und eine mit der Kamera verbundene Auswerteeinheit. Die Kamera ist dazu eingerichtet, mindestens zwei Bewegungen optisch zu erfassen, wobei die Bewegungen während des Produktionsprozessschritts ausgeführt werden und wobei mindestens eine dieser Bewegungen zumindest teilweise händisch von einem Werker durchgeführt wird. Die Kamera ist dazu eingerichtet, Bilddaten entsprechend der mindestens zwei Bewegungen zu erzeugen, anhand dieser Bilddaten mindestens zwei Bewegungsgraphen in Abhängigkeit der mindestens zwei erfassten Bewegungen zu erstellen, die mindestens zwei Bewegungsgraphen zu analysieren und in Abhängigkeit dieser Analyse ein Auswertesignal bereitzustellen. Dabei umfasst jeder Bewegungsgraph eine Zeitinformation und eine zugehörige Ortsinformation.

Die erfindungsgemäße Anordnung basiert unter anderem auf der Abstraktion von zum Teil händisch ausgeführten Bewegungen während eines Produktionsprozessschritts als Bewegungsgraphen. Dies reduziert mit Vorteil die in der anschließenden Analyse verwendete Datenmenge. Somit wird die Überprüfung von produzierten Teilen erleichtert und beschleunigt.

Im Übrigen gelten für die Anordnung die Ausführungen zum erfindungsgemäßen Verfahren entsprechend, dies gilt insbesondere hinsichtlich Vorteilen und Ausführungsformen.

Die hierin genannten Ausführungsformen können alle untereinander kombiniert werden, sofern sich nicht explizit etwas anderes ergibt.

Insbesondere ist die erfindungsgemäße Anordnung zur Ausführung des erfindungsgemäßen Verfahrens eingerichtet.

Nachfolgend wird die Erfindung rein beispielhaft unter Bezugnahme auf die Zeichnungen beschrieben. Funktions- bzw. wirkungsgleiche Zeichnungselemente tragen gleiche Bezugszeichen. Es zeigen:
Fig. 1 eine schematische Darstellung eines beispielhaften Fertigungsarbeitsplatzes an dem das erfindungsgemäße Verfahren eingesetzt wird,
Fig. 2A bis 2H schematische Darstellungen zu einem ersten beispielhaften Produktionsprozessschritt,
Fig. 3A bis 3E schematische Darstellungen zu einem zweiten beispielhaften Produktionsprozessschritt,
Fig. 4A bis 4E schematische Darstellungen zu einem dritten Produktionsprozessschritt.

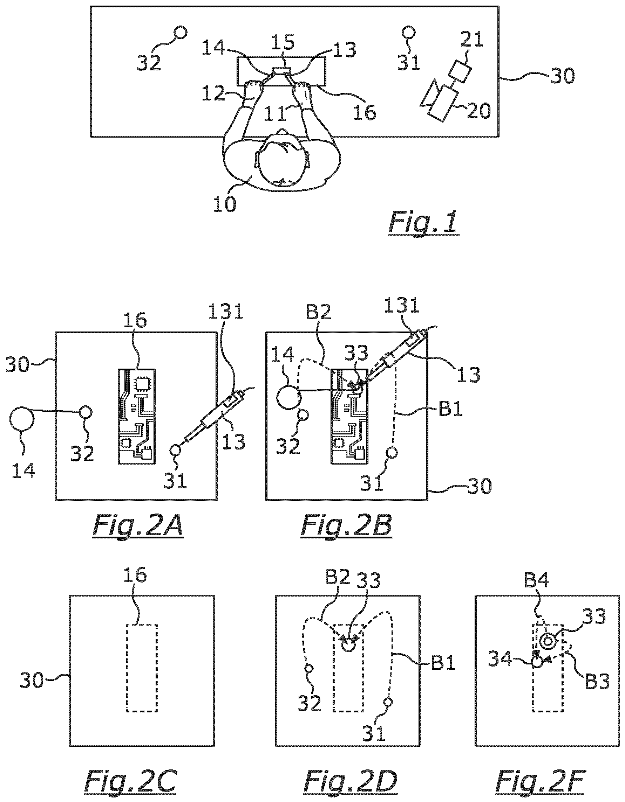

Fig. 1 zeigt eine schematische Darstellung eines beispielhaften Fertigungsarbeitsplatzes an dem das erfindungsgemäße Verfahren eingesetzt wird. Eine Person, hier ein Werker 10, arbeitet an dem beispielhaften Fertigungsarbeitsplatz 30 unter Einsatz seiner rechten Hand 11 und seiner linken Hand 12. Beispielsweise wird mit der rechten Hand 11 ein Lötkolben 13 geführt. Mit der linken Hand 12 wird ein Lötzinn 14 gehalten. Ein einzulötendes Bauteil 15 ist auf einer Platine 16 platziert. Eine feststehende Kamera 20 ist in Relation zu dem Werker 10 und dem Fertigungsarbeitsplatz 30 so montiert, dass sie die Bewegungen des Werkers 10 optisch erfassen kann. Die Auswertung der erfassten Bewegungen erfolgt in einer mit der Kamera 20 verbundenen Auswerteinheit 21.

In der beispielhaften Darstellung von Fig. 1 hat der Werker 10 bereits den Lötkolben 13 aus dessen Ruheposition 31 am Fertigungsarbeitsplatz 30 geholt und am einzulötenden Bauteil 15 positioniert. Des Weiteren hat der Werker 10 das Lötzinn 14 aus dessen Ruheposition 32 am Fertigungsarbeitsplatz 30 genommen und ebenfalls zum einzulötenden Bauteil 15 bewegt.

Die Figuren 2A bis 2H zeigen jeweils schematische Darstellungen, die sich auf einen ersten beispielhaften Produktionsprozessschritt, in dem das erfindungsgemäße Verfahren eingesetzt wird, beziehen. Der Produktionsprozessschritt wird beispielsweise an einem Fertigungsarbeitsplatz wie in Figur 1 gezeigt durchgeführt und betrifft einen Lötvorgang.

Fig. 2A zeigt die Ausgangssituation zu Beginn des Produktionsprozessschritts aus Sicht der feststehenden Kamera. Die Platine 16 mit dem einzulötenden Bauteil liegt auf dem Fertigungsarbeitsplatz 30. Der Lötkolben 13 befindet sich an seinem Ruheplatz 31. Das Lötzinn 14 wurde bereits aus seiner Ruheposition 32 geholt. Der Lötkolben 13 weist ein vordefiniertes Merkmal 131 auf, welches beispielsweise ein Strichcode ist, durch den der Lötkolben 13 eindeutig werden kann.

Fig. 2B zeigt die in dem Produktionsprozessschritt durchgeführten Bewegungen B1 und B2. Die Bewegung B1 wird mit der rechten Hand des Werkers durchgeführt. Dabei wird ausgehend von der Anfangsposition, wie in Fig. 2A gezeigt, der Lötkolben 13 aus seiner Ruheposition 31 zu einer ersten Lötposition 33 bewegt. Alternativ wird anhand des Strichcodes der Lötkolben 13 erkannt und die Bewegung seiner Spitze erfasst, so dass die Bewegung B1 die Bewegung der Spitze des Lötkolbens 13 darstellt. Die Bewegung B2 ist eine zu B1 korrespondierende Bewegung, die der Werker mit seiner linken Hand durchführt, indem er das Lötzinn 14 ebenfalls zur ersten Lötposition 33 bringt.

Fig. 2C zeigt die von der Kamera erzeugten Bilddaten entsprechend der Ausgangssituation von Fig. 2A.

Fig. 2D zeigt die von der Kamera erzeugten Bilddaten passend zu den Aufzeichnungen aus Fig. 2B. Die erste Bewegung B1 und die zweite Bewegung B2 sind deutlich zu erkennen.

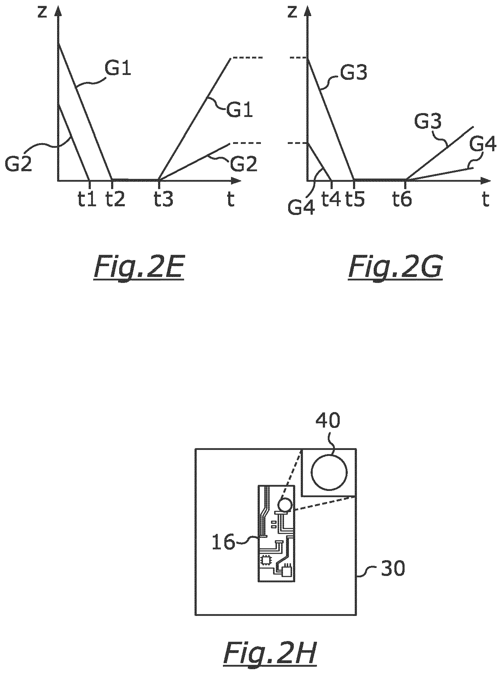

Fig. 2E zeigt zwei Bewegungsgraphen G1 und G2, die aus den Bilddaten von Fig. 2D unter Einsatz des erfindungsgemäßen Verfahrens erzeugt wurden. Der erste Bewegungsgraph G1 spiegelt dabei die erste Bewegung B1 wieder. Der zweite Bewegungsgraph G2 wurde entsprechend der zweiten Bewegung B2 erzeugt. In dem Diagramm ist eine Position Z bezogen auf die erste Lötposition 33, welche bei Z=0 zu finden ist, im Verhältnis zur Zeit t dargestellt. Zu einem Zeitpunkt t1 geht der zweite Bewegungsgraph G2 auf null, das heißt, dass das Lötzinn die erste Lötposition, beispielsweise Lötposition 33 aus Fig. 2D, erreicht. Zum Zeitpunkt t2 geht auch der erste Bewegungsgraph G1 auf null, was bedeutet, dass auch der Lötkolben die erste Lötposition erreicht hat. Zwischen t1 und t2 wird der Lötkolben vorgeheizt. Das eigentliche Einlöten passiert zwischen den Zeitpunkten t2 und t3, also während der erste und der zweite Bewegungsgraph G1 und G2 am nahezu gleichen Ort, hierbei beispielsweise bei Z=0, sind. Das Ende des Lötvorgangs, also das Wegbewegen von Lötkolben und Lötzinn, sind in dem ersten und dem zweiten Bewegungsgraphen G1, G2 ab dem Zeitpunkt t3 abgebildet.

Erkennbar ist, dass mittels der feststehenden Kamera Sequenzen des Produktionsprozessschritts, wie in Fig. 2A und 2B gezeigt, aufgenommen werden. Relevante Komponenten des Prozessschritts, hierbei beispielhaft ein Lötvorgang, werden durch Mustererkennung im Bildausschnitt identifiziert. Die zu verarbeitende Datenmenge wird dadurch drastisch reduziert. Die Bewegungen der identifizierten relevanten Komponenten, hier beispielhaft B1 und B2, werden in Abhängigkeit der Zeit jeweils zu einem Bewegungsgraph oder Trajektorie, hier beispielhaft G1 und G2, abstrahiert. Im Anschluss können die Bewegungsgraphen analysiert werden, um dann mit dem Auswertesignal eine Information darüber zu liefern, ob der Produktionsprozessschritt beispielsweise mit der erforderlichen Qualität durchgeführt wurde. Etwaige Fehler, beispielsweise eine kalte Lötstelle, können folglich direkt erkannt werden, wodurch defekte Teilprodukte sofort eliminiert werden können.

Im oben genannten Beispiel können aus den Bewegungsgraphen G1 und G2 der Fig. 2E beispielsweise folgende Informationen abgeleitet werden: Da zwischen Zeitpunkt t2 und Zeitpunkt t3 Lötzinn und Lötkolben gleichzeitig an einer Stelle waren, hat der Lötprozess offensichtlich stattgefunden. Aus der zeitlichen Differenz zwischen t3 und t2 lässt sich ableiten, ob die Lötstelle in Ordnung ist, ob es sich um eine kalte Lötstelle handeln wird, oder ob zu viel Lötzinn aufgebracht wurde.

Fig. 2F zeigt eine schematische Darstellung von Bewegungen, die während eines zweiten Lötvorgangs in dem Produktionsprozessschritt durchgeführt werden. Dabei wird in einer dritten Bewegung B3 der Lötkolben an eine zweite Lötposition 34 gebracht, während in einer vierten Bewegung B4 das Lot ebenfalls an die zweite Lötposition 34 gebracht wird.

Fig. 2G zeigte die aus den Bilddaten der Fig. 2F erstellten Bewegungsgraphen G3 und G4 im Verhältnis zur Zeit t. Der dritte Bewegungsgraph G3 wurde aus der dritten Bewegung B3 gewonnen. Der vierte Bewegungsgraph G4 wurde aus der vierten Bewegung B4 erstellt. In diesem Beispiel wird der zweite Lötvorgang direkt nach dem ersten Lötvorgang ausgeführt.

Zwischen Zeitpunkt t4 und t5 findet wieder ein Vorwärmen statt. Das eigentliche Löten erfolgt zwischen den Zeitpunkten t5 und t6. Die Bewegungsgraphen der Fig. 2G können in ähnlicher Weise analysiert werden wie die Bewegungsgraphen der Fig. 2E.

Fig. 2H zeigt eine schematische Darstellung einer optionalen statischen Analyse, die an jeden Lötvorgang angeschlossen werden kann und deren Ergebnis optional mit in das Auswertesignal einfließen kann. Die jeweils erzeugte Lötstelle, beispielsweise in Form einer Lötkugel 40, wird optisch erfasst und ausgewertet. Dabei kann beispielsweise anhand von Umrissen auch erkannt werden, dass eine unerwünschte Lötbrücke durch Überdeckung von zwei Lötpads entstanden ist.

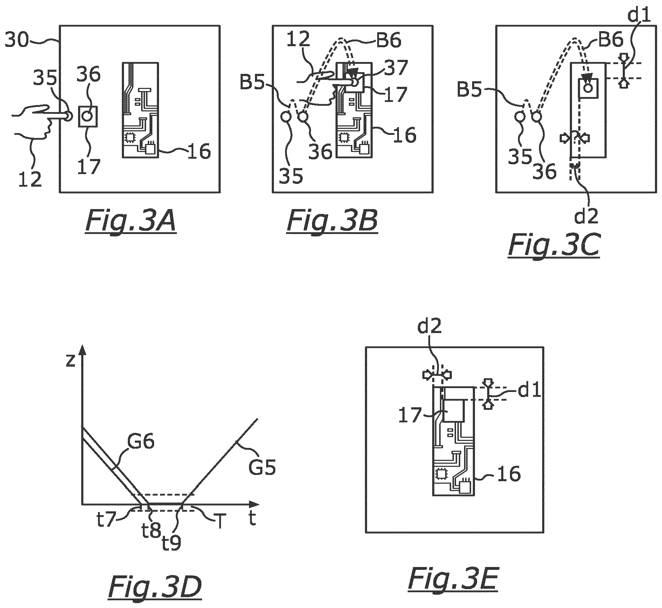

Die Figuren 3A bis 3E zeigen beispielhafte schematische Darstellungen, die sich auf einen zweiten beispielhaften Produktionsprozessschritt, in dem das erfindungsgemäße Verfahren eingesetzt wird, beziehen. In diesem Beispiel wird ein Pad 17 auf der Platine 16 platziert.

Fig. 3A zeigt die Anfangssituation für diesen Produktionsprozessschritt, in welcher eine Hand des Werkers, hier seine linke Hand 12, in einer Ausgangsposition 35 ist. Zudem befindet sich das Bauteil 17 ebenfalls in einer Ausgangsposition 36. Die Position der Hand 12 wird beispielsweise durch eine Markierung, welche auf einem Handschuh, beispielsweise am Zeigefinger des Handschuhs, angebracht ist und das vordefinierte Merkmal darstellt, erkannt. Das Bauteil 17 enthält ebenfalls ein vordefiniertes Merkmal, beispielsweise einen QR-Code, und wird dadurch eindeutig optisch erkannt.

Fig. 3B zeigt eine schematische Darstellung zweier Bewegungen B5 und B6, die in diesem Produktionsprozessschritt durchgeführt werden. Das Ergreifen des Bauteils 17 durch die Hand 12 und Platzieren des Pads 17 an der Zielposition 37 auf der Platine 16 wird in der Bewegung B5 reflektiert. Die Bewegung, die das Bauteil 17 selbst erfährt, ist als Bewegung B6 dargestellt.

Fig. 3C zeigt die aus der optischen Erfassung in Fig. 3A und 3B erzeugten Bilddaten. Die Bewegungen B5 und B6 sind zu erkennen. Zudem ist ein erster Abstand d1 des Bauteils 17 zum oberen Rand der Platine 16 und ein zweiter Abstand d2 des Bauteils 17 zum linken Rand der Platine 16 zu erkennen.

Fig. 3D zeigt die aus Fig. 3C erzeugten Bewegungsgraphen G5 und G6. Die Bewegungsgraphen G5 und G6 sind dabei bezogen auf einen räumlichen Abstand zur Zielposition 37 des Bauteils 17 bei Z=0 in Relation zur Zeit t dargestellt. Zum Zeitpunkt t7 erreicht das Bauteil 17 die Zielposition, die Hand erreicht kurz darauf zum Zeitpunkt t8 die Zielposition. Hand und Bauteil verweilen bis zum Zeitpunkt t9 an nahezu der gleichen Position. Nach dem Zeitpunkt t9 entfernt sich die Hand von der Zielposition. Es ist zudem ein Toleranzbereich T angegeben. Sofern beide Graphen G5 und G6 während der Zeitspanne zwischen t8 und t9 innerhalb des Toleranzbereichs T liegen, wird gemäß der anschließenden Analyse im bereitgestellten Auswertesignal der Produktionsprozessschritt als erfolgreich durchgeführt beurtei lt.

Fig. 3E zeigt eine schematische Darstellung einer optional ergänzend durchgeführten statischen Analyse der erzeugten Bilddaten. Hier werden beispielsweise die Abstände d1 und d2 untersucht, wodurch überprüft werden kann, ob das Bauteil 17 tatsächlich richtig positioniert wurde.

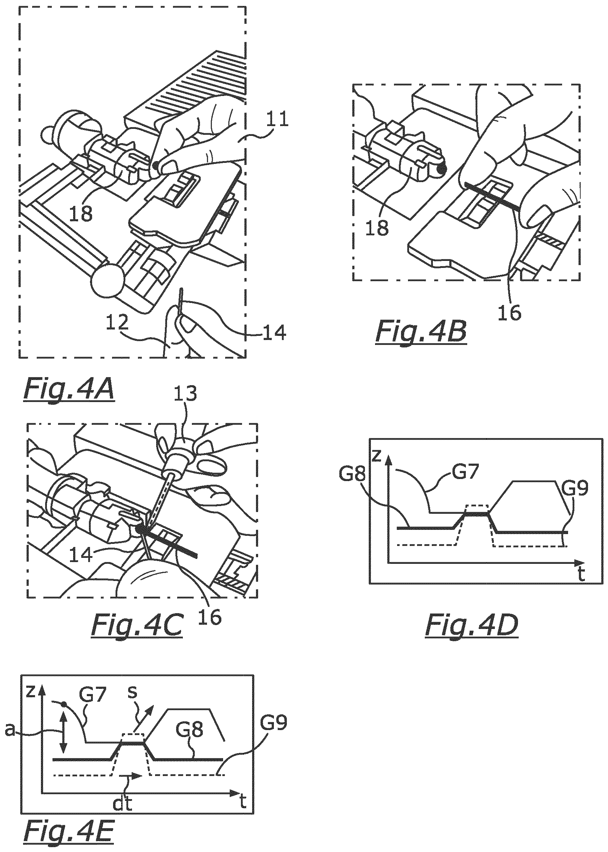

Die Figuren 4A bis 4E zeigen jeweils beispielhafte schematische Darstellungen zu einem weiteren beispielhaften Produktionsprozessschritt. In diesem Produktionsprozessschritt werden drei Bewegungen durchgeführt. Die erfassten drei Bewegungen werden erfindungsgemäß in drei Bewegungsgraphen umgewandelt und so in einfacher Art und Weise einer genaueren Analyse zugänglich gemacht.

Fig. 4A zeigt die Ausgangssituation mit einem Revolver 18 mit Kernsatz, der rechten Hand 11 des Werkers, einer auf einem verschiebbaren Träger befindlichen Platine 16, sowie der linken Hand 12 des Werkers, die das Lot 14 hält.

In Fig. 4B wird der Träger mit der Platine 16 an den Revolver 18 angenähert.

In Fig. 4C wird ein Lötvorgang unter Verwendung des Lötkolbens 13 durchgeführt.

In Fig. 4D sind die aus den Figuren 4A, 4B und 4C resultierenden Bewegungsgraphen G7, G8 und G9 dargestellt. G7 zeigt die aus der Bewegung des Revolvers extrahierte Raumkurve, G8 zeigt die von der Leiterplatte 16 durchgeführte Bewegung, während G9 die aus der Bewegung des Lötkolbens 13 extrahierte Trajektorie zeigt.

Fig. 4E zeigt einige Größen, die in der auf den Bewegungsgraphen G7 bis G9 basierenden anschließenden Analyse verwendet werden. Beispiele für diese Größen sind: ein Abstand a zwischen dem Revolver und der Leiterplatte, eine Zeitdauer dt des Lötvorgangs, eine Schnelligkeit s der Bewegung des Revolvers.

Durch eine Korrelation der abstrahierten Bewegungsmuster in Form der Bewegungsgraphen G7, G8 und G9 mit bekannten gut beziehungsweise schlecht Teilen, beziehungsweise Ergebnissen, des durchgeführten Produktionsprozessschritts lassen sich Merkmale von Mustern unterscheiden, die mit einem bestimmten Prozentsatz zu sogenannten Fail-Teilen, also Ausschuss, führen. Im Anschluss lassen sich durch Betrachtung von mehreren Datensätzen Informationen beispielsweise über den aktuellen Maschinenzustand gewinnen, beispielsweise die Taktzahl, den Output, Standzeiten und Verfügbarkeit, und ähnliches.

Optional oder zusätzlich können am Fertigungsarbeitsplatz 30, zum Beispiel aus Fig. 1, sichtbare Statusleuchten oder Stellungen von Schaltern erfasst werden und in die anschließende Analyse mit einfließen. Zudem ist es auch möglich Personenbewegungen oder auch Bewegungen von Transportwägen zu erfassen und im Anschluss zu optimieren. Des Weiteren können Gesten erfasst werden und mit dem vorgeschlagenen Verfahren untersucht werden.

### Bezugszeichenliste

- 10: Werker
- 11, 12: Hand
- 13: Lötkolben
- 14: Lötzinn
- 15: Bauelement
- 16: Platine
- 17: Bauteil
- 18: Revolver
- 20: Kamera
- 21: Auswerteeinheit
- 30: Fertigungsarbeitsplatz
- 31, 32, ..., 37: Position
- 121, 131: vordefiniertes Merkmal
- B1, B2, ..., B6: Bewegung
- G1, G2, ..., G9: Bewegungsgraph
- t1, t2, ..., t9: Zeitpunkt
- d1,d2: Abstand
- s: Geschwindigkeit
- dt: Zeitdifferenz
- a: Abstand

## Patentansprüche

1. Verfahren zum Überwachen eines Produktionsprozessschritts aufweisend folgende Schritte:
optisches Erfassen mindestens zweier Bewegungen (B1, B2) und Erzeugen entsprechender Bilddaten, wobei die Bewegungen (B1, B2) während des Produktionsprozessschritts ausgeführt werden, und wobei mindestens eine dieser Bewegungen (B1, B2) zumindest teilweise händisch von einem Werker (10) durchgeführt wird,
Erstellen mindestens zweier Bewegungsgraphen (G1, G2) in Abhängigkeit der mindestens zwei erfassten Bewegungen (B1, B2) anhand der Bilddaten,
wobei jeder Bewegungsgraph (G1, G2) eine Zeitinformation und eine zugehörige Ortsinformation umfasst,
Analysieren der mindestens zwei Bewegungsgraphen (G1, G2),
Bereitstellen eines Auswertesignals in Abhängigkeit eines Ergebnisses des Analysierens.

2. Verfahren nach Anspruch 1,
wobei das optische Erfassen unter Verwendung mindestens einer feststehenden Kamera (20) oder einer an dem Werker (10) befestigten Kamera erfolgt.

3. Verfahren nach Anspruch 1 oder 2,
wobei das Erstellen eines jeden Bewegungsgraphen (G1, G2) die folgenden Schritte umfasst:
Erkennen eines die Bewegung durchführenden Objekts in den Bilddaten anhand mindestens eines vordefinierten Merkmals (121, 131), mehrfaches Bestimmen einer Position des Objekts in aufeinander folgenden Einzelbildern der Bilddaten und Bereitstellen von entsprechenden Objektpunkten in einem Zeit-Ort-Diagramm,
Anfertigen des Bewegungsgraphen (G1, G2) durch Verbinden der Objektpunkte.

4. Verfahren nach dem vorstehenden Anspruch,
wobei das Erkennen des die Bewegung durchführenden Objekts in den Bilddaten anhand des mindestens einen vordefinierten Merkmals (121, 131) unter Einsatz einer Mustererkennung erfolgt und wobei das vordefinierte Merkmal (121, 131) ein vordefiniertes Muster, insbesondere ein vordefiniertes Muster aus mehreren Farbpunkten, ist.

5. Verfahren nach Anspruch 3 oder 4,
wobei das mindestens eine vordefinierte Merkmal (121, 131) ein visueller, digitaler Code, insbesondere ein QR-Code oder ein Strichcode, ist.

6. Verfahren nach einem der Ansprüche 3 bis 5,
wobei das Erkennen des die Bewegung durchführenden Objekts in den Bilddaten anhand des mindestens einen vordefinierten Merkmals (121, 131) einen Vergleich mit einem Element einer vordefinierten Bibliothek umfasst.

7. Verfahren nach einem der vorstehenden Ansprüche,
wobei das Analysieren der mindestens zwei Bewegungsgraphen (G1, G2) ein Bestimmen und Bereitstellen einer oder mehrerer der folgenden Auswerteparameter als Ergebnis umfasst:
eine relative Position einzelner Punkte der mindestens zwei Bewegungsgraphen zueinander, insbesondere ein Abstand zwischen denselben,
eine jeweilige Geschwindigkeit der Bewegung aus der der Bewegungsgraph abgeleitet ist,
eine jeweilige Beschleunigung der Bewegung aus der der Bewegungsgraph abgeleitet ist,
eine jeweilige Ruhezeit in der Bewegung aus der der Bewegungsgraph abgeleitet ist.

8. Verfahren nach einem der vorstehenden Ansprüche,
wobei das das Analysieren der mindestens zwei Bewegungsgraphen (G1, G2) einen Vergleich der mindestens zwei Bewegungsgraphen (G1, G2) mit mindestens zwei für den Produktionsprozessschritt vordefinierten Referenzgraphen, insbesondere unter Verwendung von künstlicher Intelligenz, und ein Bereitstellen eines aus dem Vergleich abgeleiteten Korrelationsindikators umfasst.

9. Verfahren nach Anspruch 7 oder 8,
wobei das Auswertesignal in Abhängigkeit mindestens eines Auswerteparameters und/oder in Abhängigkeit des Korrelationsindikators bereitgestellt wird.

10. Verfahren nach einem der vorstehenden Ansprüche,
wobei das Auswertesignal eine Qualität eines Ergebnisses des Produktionsprozessschritts, insbesondere die Qualität eines in dem Produktionsprozessschritt erzeugten Produkts, anzeigt.

11. Verfahren nach einem der vorstehenden Ansprüche,
wobei das Erzeugen der den mindestens zwei Bewegungen (B1, B2) entsprechenden Bilddaten ein Verkleinern eines in den Bilddaten dargestellten Ausschnitts auf einen Bildbereich, in welchem die mindestens zwei Bewegungen (B1, B2) erfasst wurden, umfasst.

12. Verfahren nach einem der vorstehenden Ansprüche weiter aufweisend:
Durchlaufen einer Vorbereitungsphase umfassend die Schritte:
optisches Erfassen mindestens zweier Sollbewegungen und Erzeugen entsprechender Referenzbilddaten, wobei die Sollbewegungen während des Produktionsprozessschritts ausgeführt werden, und wobei mindestens eine dieser Sollbewegungen zumindest teilweise händisch von einem Werker (10) durchgeführt wird,
Erstellen mindestens zweier Referenzgraphen in Abhängigkeit der mindestens zwei erfassten Sollbewegungen anhand der Referenzbilddaten, wobei jeder Referenzgraph eine Zeitinformation und eine zugehörige Ortsinformation umfasst,
Bereitstellen der Referenzgraphen als für den Produktionsprozessschritt vordefinierte Referenzgraphen.

13. Verfahren nach einem der vorstehenden Ansprüche,
wobei der Produktionsprozessschritt ein Lötvorgang ist,
wobei eine erste Bewegung (B1) ein Führen eines Lötkolbens (13) mit einer ersten Hand (11) des Werkers (10) und eine zweite Bewegung (B2) ein korrespondierendes Führen eines Lotes (14) mit einer zweiten Hand (12) des Werkers (10) ist,
wobei das Analysieren der zwei Bewegungsgraphen (G1, G2) ein Ermitteln eines Abstandes zwischen den zwei Bewegungsgraphen bezogen auf die Zeitinformation umfasst, und
wobei das Auswertesignal eine Dauer des Lötvorgangs anzeigt.

14. Anordnung zum Überwachen eines Produktionsprozessschritts aufweisend eine Kamera (20), die dazu eingerichtet ist, mindestens zwei Bewegungen (B1, B2) optisch zu erfassen, wobei die Bewegungen (B1, B2) während des Produktionsprozessschritts ausgeführt werden, und wobei mindestens eine dieser Bewegungen (B1, B2) zumindest teilweise händisch von einem Werker (10) durchgeführt wird, und
eine mit der Kamera (20) verbundene Auswerteeinheit (21), die dazu eingerichtet ist, Bilddaten entsprechend der mindestens zwei Bewegungen (B1, B2) zu erzeugen, anhand dieser Bilddaten mindestens zwei Bewegungsgraphen (G1, G2) in Abhängigkeit der mindestens zwei erfassten Bewegungen (B1, B2) zu erstellen, die mindestens zwei Bewegungsgraphen (G1, G2) zu analysieren und in Abhängigkeit dieser Analyse ein Auswertesignal bereitzustellen,
wobei jeder Bewegungsgraph (G1, G2) eine Zeitinformation und eine zugehörige Ortsinformation umfasst.
